## Europäisches Patentamt
## European Patent Office
## Office européen des brevets

(19)

(11) Numéro de publication : **0 093 051 B1**

(12) **FASCICULE DE BREVET EUROPÉEN**

(45) Date de publication du fascicule du brevet :
20.09.89

(51) Int. Cl.⁴ : **F 25 B 25/02, F 25 B 15/12**

(21) Numéro de dépôt : **83400795.7**

(22) Date de dépôt : **21.04.83**

(54) Procédé à cycle de resorption pour les pompes à chaleur.

(30) Priorité : 28.04.82 FR 8207323

(43) Date de publication de la demande :
02.11.83 Bulletin 83/44

(45) Mention de la délivrance du brevet :
20.09.89 Bulletin 89/38 .

(84) Etats contractants désignés :
AT BE CH DE IT LI NL

(56) Documents cités :
EP--A-- 0 021 205
EP--A-- 0 056 147
DE--A-- 2 807 990
DE--A-- 2 838 780
DE--C-- 678 942
DE--C-- 867 122
FR--A-- 453 183
FR--A-- 2 308 885
FR--A-- 2 451 556
US--A-- 1 926 654
US--A-- 2 182 453

(73) Titulaire : **Rodié-Talbère, Henri**
**Le Monastère**
**F-92410 Ville d'Avray (FR)**

(72) Inventeur : **Rodié-Talbère, Henri**
**Le Monastère**
**F-92410 Ville d'Avray (FR)**

(74) Mandataire : **Morash, Daniel**
**17, Avenue La Bruyère**
**F-78160 Marly-le-Roi (FR)**

EP 0 093 051 B1

## Description

La présente invention · concerne un procédé perfectionné destiné aux pompes à chaleur fonctionnant entre deux intervalles de température distincts suivant le préambule de la revendication 1.

Dans un tel procédé connu, tel que celui décrit dans le brevet français n° 453 123 (ALTENKIRCH et TENCKHOFF), l'un de ces intervalles de température est compris entre un niveau de température T1 et T2, sur lequel la pompe emprunte de la chaleur à une source froide et l'autre compris entre T3 et T4, sur lequel elle cède de la chaleur à une source chaude, ces deux intervalles de température ne se recouvrant pas, les températures de l'intervalle de la source chaude étant évidemment supérieures à celles de la source froide. Le procédé fait appel à un gaz dénommé soluté qui subit dans un solvant liquide au moins une étape d'absorption partielle ou totale au cours de laquelle de la chaleur est évacuée vers la source chaude sur l'intervalle de température T3-T4, cette étape étant suivie d'au moins une étape de désorption qui s'effectue à une pression inférieure à celle de l'étape d'absorption et au cours de laquelle de la chaleur est reçue sur l'intervalle T1-T2.

Ce procédé connu a de nombreux inconvénients pour son éventuelle mise en œuvre et fonctionnement qui est d'ailleurs douteuse, inconvénients d'ordre mécanique et équipement, mais surtout qu'il existe, dans ce procédé connu, une quasi impossibilité pour réduire l'écart des pressions en améliorant les performances : on sait que le C.O.P. (Coefficient de performance) théorique ne dépend que des écarts relatifs entre les 3 niveaux de température, c'est-à-dire que pour les écarts usuels entre la source froide (apport thermique) et la température du rejet (condenseur, absorbeur) l'obtention d'un C.O.P. élevé suppose donc une température de chaudière élevée. Dans ces conditions la plage de variation de la concentration conduit à une concentration de solution riche voisine de l'unité ; les échanges ne sont alors plus équilibrés et l'on ne peut abaisser la température de l'absorbeur-condenseur en dessous de la plage d'échange avec l'extérieur sans réduire considérablement l'emprunt à la source froide, donc de réduire le C.O.P.

Pour pallier ces inconvénients, il est proposé, et c'est l'objet de la présente invention, de modifier le cycle à résorption usuel, de façon à permettre d'amener le gaz à la pression de résorption.

Il est apparu possible de réduire notablement l'écart de pression existant entre les étapes de désorption et de résorption, pour un écart donné entre les niveaux de températures imposés pour les échanges entre le système et l'extérieur, la température maximale qu'il est possible d'atteindre dans le résorbeur n'étant pas nécessairement inférieure à celle du soluté gazeux y entrant.

Ainsi, le procédé conforme à l'invention est caractérisé en ce que :

sur la plage de température comprise entre les deux intervalles précités, de la chaleur est échangée entre l'absorbeur et le désorbeur pour étendre l'amplitude de variation de la concentration du solvant en soluté ;

le gaz est introduit dans l'extrémité la plus chaude de l'absorbeur et mis au contact de la solution pauvre et y est au moins partiellement absorbé de façon adiabatique, la solution cédant par la suite de la chaleur à la source chaude ;

la solution riche est introduite à l'extrémité froide du désorbeur où une vaporisation au moins partielle est obtenue par détente, la phase gazeuse froide étant, par la suite mélangée au gaz qui est désorbé ultérieurement dans la partie la plus chaude, l'ensemble étant, après son extraction porté à haute pression, tandis que la solution appauvrie quitte le désorbeur par son extrémité chaude et est amenée à la pression de l'absorbeur avant son introduction dans ce dernier.

De préférence le gaz en provenance d'un désorbeur est comprimé jusqu'à la pression de l'absorbeur et la température alors atteinte dans ledit absorbeur excède celle du gaz en cours de sa compression. La compression s'effectue par exemple au moyen d'un compresseur.

Les échanges de chaleur s'effectuent donc directement de la solution en cours d'enrichissement dans l'absorbeur, vers la solution en cours d'appauvrissement dans le désorbeur, ces deux fluides étant séparés par une paroi conductrice.

Ces échanges sont, par exemple, effectués par l'intermédiaire d'un fluide caloporteur contenu dans une enceinte constituant une surface d'échange placée pour partie dans l'absorbeur et pour partie dans le désorbeur, ledit fluide circulant en circuit fermé de l'une à l'autre.

Le fluide caloporteur peut également servir à assurer les échanges avec la source chaude et/ou avec la source froide.

Les échanges de chaleur entre le système et les sources chaudes et froides peuvent s'effectuer à l'aide de tubes de chaleur, de façon à supprimer tout risque de contamination entre le système et les sources extérieures.

L'exemple ci-après permet d'illustrer le procédé selon l'invention, étant entendu que d'autres couples de solvant/soluté et d'autres plages de températures peuvent être envisagés sans sortir du cadre de la présente invention.

Considérons, à titre d'exemple, le cycle décrit ci-après pour de l'ammoniac désorbé puis résorbé dans une solution aqueuse. L'étape de désorption s'effectue à une pression $P_1$ et la chaleur requise est apportée de l'extérieur par une source dite froide sur un intervalle de température $T_1$-$T_2$. L'étape de résorption est effectuée sous une pression $P_2$ et de la chaleur est évacuée vers une source chaude extérieure sur un intervalle $T_3$-$T_4$. Les inégalités suivantes sont considérées :

$P_2 > P_1$ et $T_1 < T_2 < T_3 < T_4$.

Il est connu que lorsque du gaz (soluté) est mis en présence d'un solvant liquide dont la concentration en soluté est inférieure à la concentration d'équilibre correspondant à la pression donnée, l'équilibre du système s'établira pour une température et une concentration de la solution telles que le point figuratif sur un diagramme enthalpie-concentration, soit à l'intersection de l'isobare correspondante et de la droite dite de mélange joignant les points figuratifs du gaz et du solvant aux conditions d'entrée dans l'absorbeur. Il s'agit donc d'une évolution adiabatique. Ce qui est remarquable, c'est que la température ainsi atteinte pourra être nettement supérieure à celle du gaz. Par exemple, sous 15 bar, pour du gaz contenant 99 % d'ammoniac entrant à 60 °C dans un absorbeur où une solution aqueuse est à une concentration de 5 % et à une température de 60 °C, l'équilibre correspondra à 130 °C et 23 % de concentration. Si la solution avait été introduite à 140 °C et pour toutes autres conditions identiques, l'équilibre aurait été atteint pour 160 °C et une concentration de 10 %.

Il apparaît ainsi possible d'atteindre des températures élevées sans que pour autant il soit nécessaire d'avoir une température de gaz importante, les conditions d'introduction de la solution étant, par contre, l'élément déterminant.

L'objet de la présente invention consiste essentiellement à obtenir, d'une part, un cycle ayant une amplitude de variation de la concentration du solvant aussi étendue que possible et, d'autre part, une température du solvant entrant dans le résorbeur de préférence supérieure à celle du solvant en sortant après enrichissement ; ces deux conditions ayant pour conséquence essentielle de permettre une réduction notable de l'écart de pression.

Dans le procédé selon l'invention, la solution contenue dans le résorbeur est refroidie en dessous du niveau de température qu'il serait possible d'atteindre uniquement par échange avec la source chaude extérieure, c'est-à-dire : $T_3$, au pincement près ; de la sorte sa concentration en soluté pourra être nettement élevée. Dans le désorbeur au contraire, la désorption sera poussée au-delà de la concentration correspondant à la température maximale que permet l'échange avec la source froide ($T_2$, au pincement près). La chaleur requise pour la désorption sera, selon l'invention, fournie par le refroidissement du résorbeur qui, ainsi, accroîtra la plage de variation de concentration.

Le procédé, selon l'invention, permet donc, à condition d'effectuer les échanges à contre-courant entre les fluides, d'abaisser la température de la solution en cours d'enrichissement dans le résorbeur en dessous de $T_3$ et, à la limite, d'atteindre $T_2$ ; simultanément la température de la solution appauvrie dans le désorbeur sera élevée au-delà de $T_2$ et pourra atteindre $T_3$. La plage de variation de concentration correspondant à l'intervalle de température $T_1$-$T_2$ n'ayant plus à correspondre à celle de l'intervalle $T_3$-$T_4$, il y aura

glissement vers les concentrations plus fortes pour les échanges avec la source froide, vers les concentrations faibles pour les échanges avec la source chaude, le complément de variation de concentration, avec ou sans chevauchement, correspondant aux échanges internes au système.

En prenant, toujours à titre d'exemple, un mélange eau/ammoniac, la modification du cycle, selon l'invention, conduira pour : $T_1 = 40$ °C, $T_2 = 60$ °C, $T_3 = 115$ °C $T_4 = 140$ °C, à des pressions $P_1 = 4$ bar et $P_2 = 15$ bar, au lieu de $P_1 = 1,5$ bar et $P_2 = 15$ bar, soit un rapport de pression abaissé de 10 à 3,75.

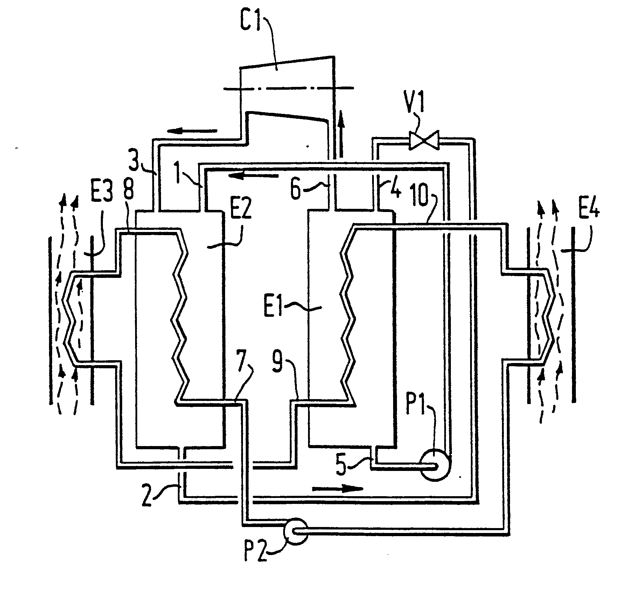

Les échanges de chaleur entre la solution s'enrichissant dans l'absorbeur et celle qui s'appauvrit dans le désorbeur pourront au choix, et sans sortir du cadre de la présente invention, s'effectuer directement au travers d'une paroi d'échangeur ou, indirectement, par l'intermédiaire d'un fluide caloporteur contenu à l'intérieur d'une enceinte dont les parois constituent la surface d'échange et dont une partie est située dans le désorbeur, l'autre dans le résorbeur. Ce fluide caloporteur s'échauffera donc en refroidissant la solution dans l'absorbeur puis se refroidira en réchauffant la solution dans le désorbeur. Il est possible de faire circuler aussi ce fluide dans les échangeurs constituant la source chaude et la source froide ; c'est cette disposition qui a été illustrée à titre d'exemple de réalisation sur la figure jointe. L'échangeur $E_1$ étant le désorbeur et l'échangeur $E_2$ le résorbeur, la solution pauvre entre dans ce dernier appareil par le conduit (1) et en sort enrichie par le conduit (2), après avoir été en contact avec le gaz introduit par le conduit (3). La solution enrichie est détendue dans la vanne $V_1$ avant d'être introduite dans $E_1$ par (4) où elle est désorbée avant d'en ressortir par (5). De là elle est pompée par $P_1$ jusqu'à la pression du résorbeur où elle est à nouveau introduite. Le gaz désorbé en $E_1$ est envoyé par le conduit (6) dans un compresseur $C_1$ d'où, sa pression ayant été élevée au niveau de $E_2$ il est à nouveau introduit dans cet appareil. Il va de soi que pour porter la pression du gaz au niveau de celle du résorbeur, il était aussi possible d'envisager une autre méthode telle que, par exemple, son absorption à basse pression puis sa désorption à la haute pression. L'absorption du gaz dans $E_2$ dégage de la chaleur qui sert à élever la température du fluide caloporteur introduit par le conduit (7) et sortant par le conduit (8). Avant d'être introduit par le conduit (9) dans l'échangeur de $E_1$, le fluide caloporteur cède de la chaleur à la source chaude par l'intermédiaire de $E_3$. Après avoir été refroidi par échange avec la solution contenue dans $E_1$, le fluide est alors réchauffé en empruntant de la chaleur à la source froide en passant dans $E_4$ avant d'être réintroduit dans l'échangeur de $E_2$ par le conduit (7).

Il est à noter que sans sortir du cadre de l'invention, il aurait été possible d'effectuer les échanges thermiques en séparant d'une part les échanges internes entre résorbeur et désorbeur effectués par l'intermédiaire d'un fluide caloporteur donné, de ceux que le système effectue avec la source chaude et la source froide, ces derniers pouvant être effectués directement ou par l'intermédiaire d'un autre fluide ; il est encore possible d'envisager, en particulier pour éviter les risques de contamination entre les sources extérieures et le système, que les échanges s'effectuent à l'aide de tubes de chaleur « caloducs ».

Lorsque le cycle à résorption est associé à un cycle à absorption, on peut de façon classique faire fonctionner le cycle à résorption à plus faible concentration, c'est-à-dire que la chaleur dégagée au résorbeur sera à une température supérieure à celle des deux désorbeurs. On peut, au contraire, faire fonctionner l'absorbeur et le résorbeur dans une plage comprise entre celle du désorbeur haute pression et celle du désorbeur basse pression. Le schéma correspond alors au fonctionnement d'une pompe à chaleur où le condenseur et l'évaporateur sont remplacés par le résorbeur et le désorbeur. On trouve alors les avantages déjà cités des échanges sur larges intervalles de température.

Il est à noter que d'autres échanges internes de chaleur entre diverses parties du système sont possibles et, en particulier sur la phase gaz ; il s'agit là de méthodes habituelles à l'art et leur emploi dépend souvent des conditions spécifiques de l'installation, par exemple des caractéristiques de la source froide souvent représentée par un courant d'effluents.

## Revendications

1. Procédé destiné aux pompes à chaleur fonctionnant entre deux intervalles de température distincts, l'un compris entre un niveau de température T1 et T2, sur lequel la pompe emprunte de la chaleur à une source froide et l'autre compris entre T3 et T4, sur lequel elle cède de la chaleur à une source chaude, ces deux intervalles de température ne se recouvrant pas, les températures de l'intervalle de la source chaude étant évidemment supérieures à celles de la source froide, le procédé faisant appel à un gaz dénommé soluté qui subit dans un solvant liquide, au moins une étape d'absorption partielle ou totale au cours de laquelle de la chaleur est évacuée vers la source chaude sur l'intervalle de température T3-T4, cette étape étant suivie d'au moins une étape de désorption qui s'effectue à une pression inférieure à celle de l'étape d'absorption et au cours de laquelle de la chaleur est reçue sur l'intervalle T1-T2, caractérisé en ce que :

sur la plage de température comprise entre les deux intervalles précités, de la chaleur est échangée entre l'absorbeur et le désorbeur pour étendre l'amplitude de variation de la concentration du solvant en soluté ;

le gaz est introduit dans l'extrémité la plus chaude de l'absorbeur et mis au contact de la solution pauvre et y est au moins partiellement absorbé de façon adiabatique, la solution cédant par la suite de la chaleur à la source chaude ;

la solution riche est introduite à l'extrémité froide du désorbeur où une vaporisation au moins partielle est obtenue par détente, la phase gazeuse froide étant, par la suite mélangée au gaz qui est désorbé ultérieurement dans la partie la plus chaude, l'ensemble étant, après son extraction porté à haute pression, tandis que la solution appauvrie quitte le désorbeur par son extrémité chaude et est amenée à la pression de l'absorbeur avant son introduction dans ce dernier.

2. Procédé selon la revendication 1, caractérisé en ce que le gaz en provenance d'un désorbeur est comprimé jusqu'à la pression de l'absorbeur et que la température alors atteinte dans ledit absorbeur excède celle du gaz en cours de sa compression.

3. Procédé selon la revendication 2, caractérisé en ce que la compression s'effectue au moyen d'un compresseur ($C_1$).

4. Procédé selon la revendication 1 caractérisé en ce que les échanges de chaleur s'effectuent directement de la solution en cours d'enrichissement dans l'absorbeur, vers la solution en cours d'appauvrissement dans le désorbeur, ces deux fluides étant séparés par une paroi conductrice.

5. Procédé selon la revendication 1 caractérisé en ce que les échanges sont effectués par l'intermédiaire d'un fluide caloporteur contenu dans une enceinte constituant une surface d'échange placée pour partie dans l'absorbeur et pour partie dans le désorbeur, ledit fluide circulant en circuit fermé de l'une à l'autre.

6. Procédé selon la revendication 5 caractérisé en ce que le fluide caloporteur sert également à assurer les échanges avec la source chaude et/ou avec la source froide.

7. Procédé selon la revendication 4 ou la revendication 5 caractérisé en ce que les échanges de chaleur entre le système et les sources chaudes et froides s'effectuent à l'aide de tubes de chaleur, de façon à supprimer tout risque de contamination entre le système et les sources extérieures.

## Claims

1. Method intended for heat pumps operating between two distinct temperature ranges, one between temperature levels $T_1$ and $T_2$, in which the pump takes heat from a cold source and the other between $T_3$ and $T_4$, in which it yields up heat to a hot source, these two temperature ranges not overlapping, the temperatures of the range of the hot source being obviously higher than those of the cold source, the method using a gas called solute which undergoes, in a liquid solvent, at least one partial or total absorption step during which heat is discharged to the hot source in the temperature range $T_3$-$T_4$, this step being followed by at least one desorption step which takes place at a pressure lower than that of the absorption step, and during which heat is received in the range $T_1$-$T_2$, characterized in that :

in the temperature range between the two said ranges, heat is exchanged between the absorber and the desorber so as to extend the amplitude of variation of concentration of the solute solvent ;

the gas is introduced into the hottest end of the absorber and is contacted with the impoverished solution and is at least partially absorbed therein adiabatically, the solution subsequently yielding up heat to the hot source ;

the rich solution is fed to the cold end of the desorber where at least partial vaporization takes place by expansion, the cold gas phase being consequently mixed with the gas which is subsequently desorbed in the hottest part, the whole being, after extraction, placed under a high pressure, whereas the impoverished solution leaves the desorber through its hot end and is brought to the pressure of the absorber before being introduced therein.

2. Method according to claim 1, characterized in that the gas coming from a desorber is compressed to the pressure of the absorber and the temperature then reached in said absorber exceeds that of the gas during compression thereof.

3. Method according to claim 2, characterized in that compression takes place by means of a compressor ($C_1$).

4. Method according to claim 1, characterized in that the heat exchanges take place directly from the solution being enriched in the absorber, to the solution being impoverished in the desorber, these two fluids being separated by a conducting wall.

5. Method according to claim 1, characterized in that the exchanges are made via a heat-carrying fluid contained in an enclosure forming an exchange surface placed partially in the absorber and partially in the desorber, said fluid flowing in a closed circuit from one to the other.

6. Method according to claim 5, characterized in that the heat-carrying fluid also serves for providing exchanges with the hot source and/or with the cold source.

7. Method according to claim 4 or claim 5, characterized in that the heat exchanges between the system and the hot and cold sources take place via heat tubes, so as to do away with any risk of contamination between the system and external sources.

## Patentansprüche

1. Verfahren, bestimmt für Wärmepumpen, die zwischen zwei unterschiedlichen Temperaturintervallen arbeiten, das eine zwischen einem Temperaturniveau von $T_1$ und $T_2$, in dem die Pumpe Wärme einer kalten Quelle entzieht und das andere zwischen $T_3$ und $T_4$, in dem sie Wärme an eine warme Quelle abgibt, wobei diese beiden Temperaturintervalle sich nicht überdecken, die Intervalltemperaturen der heißen Quelle offensichtlich höher als die der kalten Quelle liegen und beim Verfahren ein sogenanntes gelöstes Gas verwendet wird, das in einem flüssigen Lösungsmittel wenigstens eine Stufe der teilweisen oder totalen Absorption erfährt, während der Wärme gegen die heiße Quelle im Temperaturintervall $T_3$-$T_4$ abgeführt wird, wobei sich an diese Stufe wenigstens eine Stufe der Desorption anschließt, die bei einem Druck kleiner als dem der Absorptionsstufe abläuft und während der Wärme im Intervall $T_1$-$T_2$ aufgenommen wird, dadurch gekennzeichnet, daß :

im Temperaturbereich zwischen den beiden genannten Intervallen Wärme zwischen dem Absorber und dem Desorber ausgetauscht wird, um die Amplitude der Konzentrationsveränderung des Lösungsmittels in Gelöstem zu strecken ;

das Gas in das heißeste Ende des Absorbers eingeführt und mit der verarmten Lösung kontaktiert wird und hierin wenigstens teilweise adiabatisch absorbiert wird, wobei die Lösung Wärme an die warme Quelle abgibt ;

die reiche Lösung am kalten Ende des Desorbers eingeführt wird, wo eine wenigstens teilweise Verdampfung durch Entspannen erreicht wird, wobei die gasförmige kalte Phase dann mit dem Gas vermischt wird, welche schließlich im heißesten Teil desorbiert wird, wobei das Ganze nach seiner Extraktion auf hohen Druck gebracht wird, während die verarmte Lösung den Desorber über ihr heißes Ende verläßt und auf den Druck des Absorbers gebracht wird, bevor sie in letzteren eingeführt wird.

2. Verfahren nach Anspruch 1, dadurch gekennzeichnet, daß das aus einem Desorber kommende Gas bis auf den Druck des Absorbers komprimiert wird und daß die dann in diesem Absorber erreichte Temperatur die des Gases während seiner Kompression überschreitet.

3. Verfahren nach Anspruch 2, dadurch gekennzeichnet, daß die Kompression vermittels eines Kompressors ($C_1$) vorgenommen wird.

4. Verfahren nach Anspruch 1, dadurch gekennzeichnet, daß die Wärmeaustauschervorgänge direkt von der im Anreicherungszustand in dem Absorber befindlichen Lösung gegen die im Verarmungszustand im Desorber befindliche Lösung vorgenommen werden, wobei diese beiden Fluide durch eine leitende Wand getrennt werden.

5. Verfahren nach Anspruch 1, dadurch gekennzeichnet, daß die Wärmeaustauschervorgänge vermittels eines Wärmeträgerfluids vorgenommen werden, der in einem umschlossenen Raum enthalten ist, der eine Wärmeaustauscherfläche bildet, die zum Teil im Absorber und zum Teil im Desorber angeordnet ist, wobei dieses Fluid in geschlossenem Kreislauf vom einen zum anderen zirkuliert.

6. Verfahren nach Anspruch 5, dadurch gekennzeichnet, daß das Wärmeträgerfluid auch dazu dient, die Austauschervorgänge mit der heißen Quelle und/oder der kalten Quelle sicherzustellen.

7. Verfahren nach Anspruch 4 oder Anspruch 5, dadurch gekennzeichnet, daß die Wärmeaustauschervorgänge zwischen dem System und den heißen und kalten Quellen mit Hilfe von Wärmerohren derart stattfinden, daß jede Gefahr einer Verschmutzung zwischen dem System und den äusseren Quellen beseitigt wird.